(19) Europäisches Patentamt
European Patent Office
Office européen des brevets

(11) **EP 2 680 209 A1**

## (12) EUROPEAN PATENT APPLICATION

(43) Date of publication:
**01.01.2014 Bulletin 2014/01**

(51) Int Cl.:
***G06Q 30/02*** *(2012.01)*

(21) Application number: **12174493.2**

(22) Date of filing: **29.06.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(71) Applicant: **Axel Springer Digital TV Guide GmbH
10117 Berlin (DE)**

(72) Inventors:
• **Barbieri, Mauro
5613 LC Eindhoven (NL)**

• **Korst, Jan
5616 BL Eindhoven (NL)**
• **Pronk, Serverius Petrus Paulus
5262 CN Vught (NL)**
• **Clout, Ramon
5646HZ Eindhoven (NL)**

(74) Representative: **Eisenführ Speiser
Patentanwälte Rechtsanwälte PartGmbB
Anna-Louisa-Karsch-Strasse 2
10178 Berlin (DE)**

(54) **Device and method for automatic generation of a recommendation**

(57) The invention refers to a device and a method for automatic generation of recommendation for an item *p* to a user *u.* The device comprises or is at least indirectly connected to an item database containing a user profile database and a user interrelation database. The device comprises a standard recommender engine that is configured to access said item database and said user profile database and to calculate a score $s(p,u)$ in a [0,1] interval indicating a "like" degree of an item *p* for user *u* based on a user profile of user *u.* The device further comprises a content discovery recommender that is configured to access said user interrelation database and to find at least users v that have a direct connection to user *u* and to further access said user profile database in order to determine a fraction of the users v that know an item *p* and to generate a recommendation based on the score $s(p,u)$ of an item *p* and the extent (that is the fraction of the users v that know an item *p*) the item is known among users v that have a direct connection to user *u.*

Figure 1

## Description

The invention refers to a device and a method for automatic generation of a recommendation for an item.

Such devices are commonly called recommender systems. Recommender systems are machines that shall help users to mitigate a potential information overload.

Users have to deal with the so-called "information overload" problem consisting of an overwhelming amount of (commercial) information they cannot cope with and that restricts their ability to find what they like, stay focused and concentrate on things that are worthwhile according to their interests.

Recommender systems are becoming a popular tool to deal with information overload. They allow retrieving from a vast amount of items, such as A/V content repositories, product catalogues and the like, only those items a user (or a group of users) likes. These recommenders are typically offered as a stand-alone service (e.g. Movielens) or as an add-on to an existing service (e.g. Amazon, iTunes). They increasingly appear in consumer devices, such as the TiVo digital video recorder and the products of APRICO Solutions.

Many internet video services, including YouTube.com, Hulu.com, etc., offer users the possibility of "recommending" a video to friends by either referring to it via a unique URL that can be embedded in an email or by directly connecting to a user's social network, such as facebook. Additionally, there exist also dedicated websites that offer sharing and reviewing services, such as Digg.com, Reddit.com and Delicious.com.

In order to enable a machine to generate recommendations, it is known to combine user ratings of an item with a user profile and to retrieve similar user profiles and to generate a recommendation to users that have a user profile similar to that of a user that gave a positive rating to an item.

While this approach is successfully implemented by prior art recommender systems, there is still a need for new or alternative approaches. It is an object of the invention to meet this need.

According to the invention, this object is achieved by a device for automatic generation of recommendation for an item $p$ to a user $u$, said device comprising or being at least indirectly connected to - and thus having access to -:

- an item database containing information on available items,

- a user profile database containing, for a user $v$ of the system, information on which items the user has seen or purchased or rated, and

- a user interrelation database containing information on connections existing among users $u$ and v, wherein a direct connection is given if a user $v$ belongs to contacts of user $u$.

The device comprises a standard recommender engine that is configured to access said item database and said user profile database and to calculate a score $s(p,u)$ in a [0,1] interval indicating a "like" degree of an item $p$ for user $u$ based on a user profile of user $u$. The device further comprises a content discovery recommender that is configured to access said user interrelation database and to find at least users $v$ that have a direct connection to user $u$ and to further access said user profile database in order to determine a fraction of the users $v$ that know an item $p$ and to generate a recommendation based on the score $s(p,u)$ of an item $p$ and the extent (that is the fraction of the users $v$ that know an item $p$) the item is known among users $v$ that have a direct connection to user $u$.

The user interrelation database may be a social network database.

The inventors have taken into consideration that people typically trust their friends more than they trust a recommender system. A recommendation made by a friend is usually rated higher in importance and relevance than a recommendation made by a machine, no matter how accurate or relevant the actual recommendation is. Moreover, people like to share their discoveries of new content or new items with friends. For a person, it can be considered very rewarding to be the first to introduce a new item (song, movie, etc.) into his/her community of friends, especially if this item is liked by many in this community. It can be a means to receive appreciation from friends. Many internet services and software applications support methods that allow users to share with their friends things they find and like.

Because the device also determines a fraction of the users $v$ that know an item $p$, this fraction can be taken into account when generating a recommendation for an item. Preferably, the device is configured to generate an item recommendation for items if the fraction of the users $v$ that know an item $p$ is relatively small. In particular, the device is preferably configured to generate a modified score depending on a standard score $s(p,u)$ and the fraction of the users $v$ that know an item $p$. While this preferred approach appears counter-intuitive, it is based on the idea to recommend items to users that are known the least in their social network but have a high like-degree, not only for the users themselves but also for their friends. In this way, users are encouraged to try out new items that are potentially interesting for their whole social network and then be the first to claim of having "discovered" them.

Thus, an automatic device is made possible that can create item recommendations, even if the items are little known so far, which is more challenging than recommending well-established items.

According to a preferred embodiment, the device is configured to determine the score $s(p, u)$ for an item $p$ in said item database based on a profile of a user $u$ in the user profiles database and wherein said content discovery recommender comprises a community statistics unit and a content discovery recommender unit that are configured to perform the following steps to generate N item recommendations for a given user $u$:

- The community statistics unit retrieves from the user interrelation database a community $C^{(1)}(u)$ that comprises all users $v$ directly connected to user $u$, and
- the content discovery recommender unit finds a subset of $N$ items $p$ that optimizes a combination of the cumulative score for user $u$ and a measure called $k$ that indicates to what extent the item $p$ is known in the community $C^{(1)}(u)$ generated by the community statistics unit, wherein k is defined as follows:

$$k(p,u) = \frac{1}{\left|C^{(1)}(u)\right|} \sum_{v \in C^{(1)}(u)} \mathrm{seen}(p,v)$$

with $|C^{(1)}(u)|$ being the number of users $v$ directly connected to user $u$, as can be determined by the community statistics unit,
and seen($p, v$) being a function that returns 1 if a particular user $v$ has seen item $p$, and otherwise returns 0 indicating that user $v$ has not seen item $p$.

According to a further preferred embodiment, the content discovery recommender unit is configured to calculate a modified score $s'(p,u)$ defined as follows:

$$s'(p,u) = (1-\lambda)s(p,u) + \lambda(1-k(p,u)),$$

wherein the constant $\lambda$ is suitably chosen in the [0,1] interval.

Preferably, the content discovery recommender unit is further configured to select and output the $N$ items with the highest score $s'(p,u)$. These items thus are recommended. Preferably, the community statistics unit is configured to retrieve from the user interrelation database for each user $v \in C^{(1)}(u)$ a first-level community $C^{(1)}(v)$ that comprises at least all users directly connected to user $v$, wherein the members $v'$ of the first-level community $C^{(1)}(v)$ are indirectly connected to user $u$ thus forming a second-level community $C^{(2)}(u)$ of user $u$: $C^{(2)}(u) = \bigcup_{v \in C^{(1)}(u)} C^{(1)}(v)$. In this embodiment, the content discovery recommender unit finds a subset of $N$ items $p$ that optimizes a combination of the cumulative score for user $u$ and a measure called $k$ that indicates to what extent the item $p$ is known in the community $C^{(n)}(u)$ generated by the community statistics unit, wherein $k$ is defined as follows:

$$k(p,u) = \frac{1}{\left|C^{(n)}(u)\right|} \sum_{v \in C^{(n)}(u)} \mathrm{seen}(p,v)$$

With respect to all embodiments, it is preferred that the standard recommender engine is configured to determine the score $s(p,u)$ based on naive Bayesian classification or collaborative filtering.

Preferably, the device comprises a filter that filters out items that are probably not interesting for a substantial subset of users connected to user $u$. It is particularly preferred if the filter is configured to filter out items with a score $s(p,u)$ below a predetermined threshold, for instance items having a score $s(p,u) < 0,6$. Suitable threshold values are between 0,3 and 0,8 depending on the desired selectivity.

The device may also be configured to determine an extended score $s'(p,u)$ such that also the "like" degree of the users $v$ belonging to contacts of user $u$ is taken into account.

Preferably, the extended score $s'(p,u)$ is calculated by multiplying $s(p,u)$ by e.g. the maximum (or average) of the "like" degrees of the friends in $C^{(n)}(u)$. An appropriate and thus preferred formula for calculating the extended score $s'(p,u)$ is:

$$s'(p,u) = \left[(1-\lambda)s(p,u) + \lambda(1-k(p,u))\right] \max_{v \in C^{(n)}(u)} \left\{s(p,v)\right\}.$$

According to the invention, the above object is also achieved by a method for automatic generation of recommendation for an item $p$ to a user $u$, said method comprising the steps:

Calculating a score $s(p,u)$ in an [0,1] interval indicating a "like" degree of an item $p$ for user $u$ based on a user profile of user $u$,
finding at least users $v$ that have a direct connection to user $u$,
determining a fraction of the users $v$ that know an item $p$, and
generating a recommendation based on the score $s(p,u)$ of an item $p$ and on the extent (the fraction of the users $v$ that know an item $p$) the item is known among users $v$ that have a direct connection to user $u$.

In a preferred embodiment of the method, the step of finding at least users $v$ that have a direct connection to user $u$ includes generating a community $C^{(1)}(u)$ that comprises all users $v$ directly connected to user $u$, and the steps of determining a fraction of the users $v$ that know an item $p$ and generating a recommendation comprise finding a subset of $N$ items $p$ that optimize a combination of the cumulative score $s(p,u)$ for user $u$ and a measure called $k$ that indicates to what extent the item $p$ is known in the community $C^{(1)}(u)$ generated by the community statistics unit, wherein $k$ is defined as follows:

$$k(p,u) = \frac{1}{\left|C^{(1)}(u)\right|} \sum_{v \in C^{(1)}(u)} \mathrm{seen}(p,v)$$

with $|C^{(1)}(u)|$ being the number of users $v$ directly connected to user $u$
and seen($p, v$) being a function that returns 1 if a particular user $v$ has seen item $p$, and otherwise returns 0 indicating that user $v$ has not seen item $p$.
In another preferred embodiment of the method, the step of generating a recommendation comprises calculating a modified score $s'(p,u)$ defined as follows:

$$s'(p,u) = (1-\lambda)s(p,u) + \lambda(1-k(p,u)),$$

wherein the constant $\lambda$ is suitably chosen in the [0,1] interval.
Preferably, the method further comprises the step of finding at least users $v'$ that have an indirect connection to user $u$ by generating another first-level community $C^{(1)}(v)$ that comprises at least all users directly connected to user $v$, wherein the members $v'$ of the first-level community $C^{(1)}(v)$ are indirectly connected to user $u$, thus forming a second-level community $C^{(2)}(u)$ of user $u$. In this method, the steps of determining a fraction of the users $v$ that know an item $p$ and generating a recommendation comprise finding a subset of $N$ items $p$ that optimize a combination of the cumulative score $s(p,u)$ for user $u$ and a measure called $k$ that indicates to what extent the item $p$ is known in the community $C^{(n)}(u)$ generated by the community statistics unit, wherein $k$ is defined as follows:

$$k(p,u) = \frac{1}{\left|C^{(n)}(u)\right|} \sum_{v \in C^{(n)}(u)} \mathrm{seen}(p,v)$$

with $|C^{(n)}(u)|$ being the number of users indirectly connected to user $u$

and seen($p,v$) being a function that returns 1 if a particular user $v$ has seen item $p$, and otherwise returns 0 indicating that user $v$ has not seen item $p$.

Further preferred aspects of the method correspond to the preferred embodiments of the device.

The above and other aspects, features and advantages of the present invention will be more apparent from the following more particular description thereof, presented in conjunction with the following drawings, wherein:

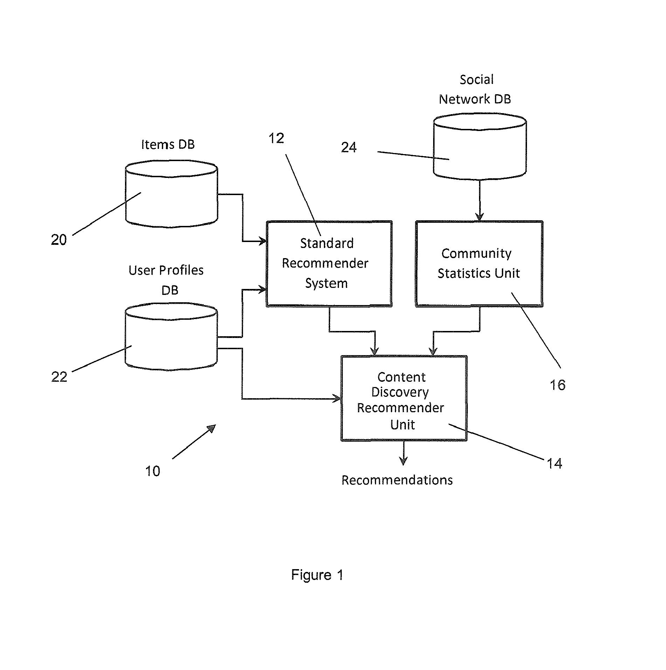

Figure 1 shows a schematic diagram of a system implementing the invention.

The following description is of the best mode presently contemplated for carrying out the invention. This description is not to be taken in a limiting sense, but is made merely for the purpose of describing the general principles of the invention. The scope of the invention should be determined with reference to the claims.

Figure 1 illustrates an example of a device 10 for automatic generation of a recommendation for an item. According to Figure 1, the device comprises a standard recommender system 12, a content discovery recommender unit 14 and a community statistics unit 16. The content discovery recommender unit 14 has an input connected to the standard recommender system 12 and a further input connected with a community statistics unit 16.

The device 10 further is connected to or has access to an item database 20, a user profile database 22 and a social network database 24. The social network database 24 is a user interrelation database that contains information about social contacts between users. User profiles of such users are stored in the user profiles database 22. Item database 20 contains information about items that potentially could be recommended to a user.

The standard recommender system 12 of device 10 is connected to or can access item database 20 and user profiles database 22 to generate a standard score for an item p, based e. g. on a feature-value pair evaluation approach as known in the art.

The community statistics unit 16 of device 10 is connected to or can access social network database 24 in order to determine the number of social contacts a user has. Social contacts of a particular user are further users that know the particular user or that are otherwise related to the particular user like "friends" in a well-known social network, such as facebook. The content discovery recommender unit 14 of device 10 can generate a recommendation of an item that is relatively "new" to a particular social community by taking into account a standard score for an item as determined by the standard recommender system 12 and further taking into account a degree of item awareness of a particular item in a particular social community.

The item database contains information on the items available in the system, while the user profiles database contains - for each user of the system - information on which items the user has seen or purchased or rated. The social network database contains information on the social connections existing among users and, therefore, more generally is called user interrelation database. Connections are more generally referred to as "contacts" in the context of this disclosure. Examples of social connections are "friend" or "colleague" relationships explicitly indicated by the users. Other connections can be determined by observing frequent email traffic or other forms of messaging and communication among users. External social networks could also be used.

The standard recommender system is a recommender system that calculates scores for items for a user based on the profile of this user in the user profiles database. Examples of recommender systems that can be used are those based on Naive Bayesian Classification or collaborative filtering.

Given an item $p$ and a user $u$, the standard recommender system calculates a score $s(p,u)$ in the interval [0,1] indicating a "like" degree of item $p$ for user $u$.

The following steps are performed by the content discovery recommender unit and the community statistics unit to generate a number of N item recommendations for a given user $u$:

1. The community statistics unit retrieves from the social network database all users $C^{(1)}(u)$ directly connected to user $u$. $C^{(1)}(u)$ is called the first-level community.

2. The community statistics unit retrieves from the social network database for each user $v \in C^{(1)}(u)$ all users $C^{(1)}(v)$ directly connected to user $v$. The union of $C^{(1)}(u)$ and all $C^{(1)}(v)$ for each $v \in C^{(1)}(u)$ is called second-level community $C^{(2)}(u)$ in this context. This step can be repeated to create larger sets of users called third-level community, fourth-level community and so on, until the number of users in the community set is large enough.

3. The content discovery recommender unit finds a subset of N items that optimizes a combination of the cumulative score for user u and a measure called k that indicates to what extent the item is known in the community built up in step 2. More formally, the content discovery recommender calculates a score $s'(p,u)$ defined as follows:

$$s'(p,u) = (1-\lambda)s(p,u) + \lambda(1-k(p,u)),$$

where:

$$k(p,u) = \frac{1}{\left|C^{(n)}(u)\right|} \sum_{v \in C^{(n)}(u)} \mathrm{seen}(p,v)$$

The constant $\lambda$ is suitably chosen in the [0,1] interval. The function seen($p,u$) has the value of 1 if user $u$ has seen item $p$ and otherwise has the value 0.

Next, the $N$ highest scoring items are selected and output by the content discovery recommender unit as recommended items or items to be recommended.

In a further preferred embodiment, to be also interesting for personal recommendation to friends, the item should also be interesting for a large enough subset of the community. This could be implemented as a filter that filters out items that are probably not interesting for a substantial subset of friends. Alternatively, it could be incorporated by extending the $s'(p,u)$ term, such that also the "like" degree of the first-level community, the second-level community, etc. can be taken into account. The influence of the "like" degree of a person can be weighed by the distance of a person to the given user.

In yet another preferred embodiment, to avoid that exactly the same items are recommended to a user and his/her friends, the function seen($p,u$) could be extended to 'seen-by-or-recommended-to($p,u$)'. This avoids that a group of friends all receive the same items. Alternatively, the score calculated by content discovery recommender can be expanded to include a portion of a "like" degree, for instance by multiplying it by e.g. the maximum (or average) of the "like" degrees of the friends in $C^{(n)}(u)$:

$$s'(p,u) = \left[(1-\lambda)s(p,u) + \lambda(1-k(p,u))\right] \max_{v \in C^{(n)}(u)} \left\{s(p,v)\right\}.$$

Of course, other functions are possible. The ones given are only a preferred embodiment.

## Claims

1. Device for automatic generation of recommendation for an item $p$ to a user $u$, said device comprising or being at least indirectly connected to *(having access to)*:

   - an items database containing information on available items
   - a user profile database, containing - for a user $v$ of the system - information on which items the user has seen or purchased or rated, and
   - a user interrelation database containing information on connections existing among users $u$ and $v$, wherein a direct connection is given if a user $v$ belongs to contacts of user $u$,
   wherein the device comprises a standard recommender engine that is configured to access said item database and said user profile database and to calculate a score $s(p,u)$ in a [0,1] interval indicating a "like" degree of an item $p$ for user $u$ based on a user profile of user $u$, and
   a content discovery recommender that is configured to access said user interrelation database and to find at least users $v$ that have a direct connection to user $u$ and to further access said user profile database in order to determine a fraction of the users $v$ that know an item $p$ and to generate a recommendation based on the score $s(p,u)$ of an item $p$ and on the extent (the fraction of the users $v$ that know an item $p$) the item is known among users $v$ that have a direct connection to user $u$.

2. Device according to claim 1, wherein said device is configured to determine the score $s(p, u)$ for an item $p$ in said item database based on a profile of a user $u$ in the user profiles database, and wherein said content discovery recommender comprises a community statistics unit and a content discovery recommender unit that are configured to perform the following steps to generate $N$ item recommendations for a given user $u$:

- The community statistics unit retrieves from the user interrelation database a community $C^{(1)}(u)$ that comprises all users $v$ directly connected to user $u$ and
- the content discovery recommender unit finds a subset of $N$ items $p$ that optimizes a combination of the cumulative score for user $u$ and a measure called k that indicates to what extent the item $p$ is known in the community $C^{(1)}(u)$ generated by the community statistics unit, wherein $k$ is defined as follows:

$$k(p,u) = \frac{1}{\left|C^{(1)}(u)\right|} \sum_{v \in C^{(1)}(u)} \text{seen}(p,v)$$

with $|C^{(1)}(u)|$ being the number of users $v$ directly connected to user $u$,
and seen$(p,v)$ being a function that returns 1 if a particular user $v$ has seen item $p$, and otherwise returns 0 indicating that user $v$ has not seen item $p$.

3. Device according to claim 2, wherein the content discovery recommender unit is configured to select and output the $N$ highest scoring items.

4. Device according to claim 2 or 3, wherein the content discovery recommender unit is configured to calculate a modified score $s'(p,u)$ defined as follows:

$$s'(p,u) = (1-\lambda)s(p,u) + \lambda(1 - k(p,u))$$

wherein the constant $\lambda$ is suitably chosen in the [0,1] interval.

5. Device according to one of claims 2 to 4, wherein the community statistics unit is configured to retrieve from the user interrelation database for each user $v \in C^{(1)}(u)$ another first-level community $C^{(1)}(v)$ that comprises at least all users directly connected to user $v$, wherein the members $v'$ of the first-level community $C^{(1)}(v)$ are indirectly connected to user $u$, thus forming a second-level community $C^{(2)}(u)$ of user $u$, and wherein the content discovery recommender unit finds a subset of $N$ items $p$ that optimizes a combination of the cumulative score for user $u$ and a measure called k that indicates to what extent the item $p$ is known in the community $C^{(n)}(u)$ generated by the community statistics unit, wherein k is defined as follows:

$$k(p,u) = \frac{1}{\left|C^{(n)}(u)\right|} \sum_{v \in C^{(n)}(u)} \text{seen}(p,v)$$

6. Device according to a least one of claims 1 to 5, wherein the standard recommender engine is configured to determine the score $s(p,u)$ based on Naive Bayesian Classification or collaborative filtering.

7. Device according to a least one of claims 1 to 6, wherein the device comprises a filter that filters out items that are probably not interesting for a substantial subset of users connected to user $u$.

8. Device according to a least one of claims 1 to 6, wherein the device is configured to determine an extended score $s'(p,u)$ such that also the "like" degree of the users $v$ belonging to contacts of user $u$ is taken into account.

9. Device according to claim 5 and 8, wherein the device is configured to weigh the influence of the "like" degree of a user $v$ and $v$,' depending on the distance of a particular user $v$ to user $u$ such that members $v$' of the second-level community $C^{(2)}(u)$ have less influence than members $v$ of the first-level community $C^{(1)}(u)$

10. Device according to a least one of claims 1 to 9, wherein the device is configured to determine a modified function seen'$(p,v)$ instead of seen$(p, v)$, seen'$(p,v)$ being a function that returns 1 if a particular user $v$ has seen item $p$ and/or item $p$ was recommended to user $v$, and that otherwise returns 0 indicating that user $v$ has not seen item $p$ or that item $p$ was not recommended to user $v$.

11. Method for automatic generation of recommendation for an item $p$ to a user $u$, said method comprising the steps:

Calculating a score $s(p,u)$ in an [0,1] interval indicating a "like" degree of an item $p$ for user $u$ based on a user profile of user $u$,
finding at least users $v$ that have a direct connection to user $u$,
determining a fraction of the users $v$ that know an item $p$, and
generating a recommendation based on the score $s(p,u)$ of an item $p$ and on the extent (the fraction of the users $v$ that know an item $p$) the item is known among users $v$ that have a direct connection to user $u$.

12. Method according to claim 11, wherein the step of finding at least users $v$ that have a direct connection to user $u$ includes generating a community $C^{(1)}(u)$ that comprises all users $v$ directly connected to user $u$, and

- wherein the steps of determining a fraction of the users $v$ that know an item $p$ and generating a recommendation comprise finding a subset of $N$ items $p$ that optimize a combination of the cumulative score $s(p,u)$ for user $u$ and a measure called $k$ that indicates to what extent the item $p$ is known in the community $C^{(1)}(u)$ generated by the community statistics unit, wherein $k$ is defined as follows:

$$k(p,u) = \frac{1}{\left|C^{(1)}(u)\right|} \sum_{v \in C^{(1)}(u)} \text{seen}(p,v)$$

with $|C^{(1)}(u)|$ being the number of users $v$ directly connected to user $u$,
and seen$(p, v)$ being a function that returns 1 if a particular user $v$ has seen item $p$, and otherwise returns 0 indicating that user $v$ has not seen item $p$.

13. Method according to claim 12, wherein the $N$ highest scoring items are selected and output by the content discovery recommender unit.

14. Method according to one claims 11 to 13 wherein the step of generating a recommendation comprises calculating a modified score $s'(p,u)$ defined as follows:

$$s'(p,u) = (1-\lambda)s(p,u) + \lambda(1-k(p,u))$$ ,

wherein the constant $\lambda$ is suitably chosen in the [0,1] interval.

15. Method according to one of claims 11 to 14, wherein the method further comprises the step of finding at least users $v$' that have an indirect connection to user $u$ by generating another first-level community $C^{(1)}(v)$ that comprises at least all users directly connected to user $v$, wherein the members $v$' of the first-level community $C^{(1)}(v)$ are indirectly connected to user $u$, thus forming a second-level community $C^{(2)}(u)$ of user $u$, wherein the steps of determining a fraction of the users $v$ that know an item $p$ and generating a recommendation comprise finding a subset of $N$ items $p$ that optimize a combination of the cumulative score $s(p,u)$ for user $u$ and a measure called $k$ that indicates to what extent the item $p$ is known in the community $C^{(n)}(u)$ generated by the community statistics unit, wherein k is defined

as follows:

$$k(p,u) = \frac{1}{\left|C^{(n)}(u)\right|} \sum_{v \in C^{(n)}(u)} \text{seen}(p,v)$$

with $|C^{(1)}(u)|$ being the number of users $v$ directly connected to user $u$
and seen$(p, v)$ being a function that returns 1 if a particular user $v$ has seen item $p$, and otherwise returns 0 indicating that user $v$ has not seen item $p$.

Social
Network DB

Items DB

12

24

20

Standard
Recommender
System

Community
Statistics Unit

User Profiles
DB

16

22

Content
Discovery
Recommender
Unit

10

14

Recommendations

Figure 1

Europäisches
Patentamt
European
Patent Office
Office européen
des brevets

# EUROPEAN SEARCH REPORT

Application Number

EP 12 17 4493

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| | The claimed subject-matter, with due regard to the description and drawings in accordance with Art. 92 EPC, relates to processes comprised in the list of subject-matter and activities excluded from patentability under Art. 52(2) and (3) EPC. The information technology employed as an enabler for carrying out said processes is conventional. Its use for carrying out non-technical processes forms part of common general knowledge and it was widely available to everyone at the date of filing of the present application. No documentary evidence is therefore considered necessary. (See Official Journal EPO 11/2007, pages 592ff and 594ff)<br><br>----- | | INV.<br>G06Q30/02 |

TECHNICAL FIELDS
SEARCHED      (IPC)

G06Q

The present search report has been drawn up for all claims

| Place of search | Date of completion of the search | Examiner |
|---|---|---|
| Munich | 12 November 2012 | Lopes Margarido, C |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)